# EUROPÄISCHE PATENTANMELDUNG

(11) **EP 2 465 657 A1**
(43) Veröffentlichungstag der Anmeldung: **20.06.2012**
(21) Anmeldenummer: 10195335.4
(22) Anmeldetag: 16.12.2010
(51) Int. Cl.: B29C 44/58, B29C 44/60

(54) **Verfahren zur Herstellung niederdichter Polyurethanformkörper**

(71) Anmelder: BASF SE, 67056 Ludwigshafen (DE)
(72) Erfinder: Die Erfindernennung liegt noch nicht vor

(57) **Zusammenfassung**

Die vorliegende Erfindung betrifft ein Verfahren zur Herstellung von Polyurethanschaumstoffformkörper mit einer Formteildichte von 100 bis 300 g/L bei dem man (a) organische Polyisocyanate mit (b) Polyolen, (c) Treibmitteln, enthaltend Wasser und gegebenenfalls (d) Kettenverlängerungsmitteln und/oder Vernetzungsmitteln, (e) Katalysatoren und (f) sonstigen Hilfsmitteln und/oder Zusatzstoffen, zu einer Reaktionsmischung vermischt, in eine Form gibt und zu einem Polyurethanschaumstoffformkörper ausreagieren lässt, wobei das freie Raumgewicht des Polyurethanschaumstoffs 90 bis 200 g/L beträgt und die Form mindestens eine Einrichtung zur Druckkontrolle aufweist. Weiter betrifft die vorliegende Erfindung ein Polyurethanschaumstoffformkörper, erhältlich nach einem solchen Verfahren und die Verwendung eines solchen Polyurethanformkörpers als Schuhsohle.

## Beschreibung

Die vorliegende Erfindung betrifft ein Verfahren zur Herstellung von Polyurethanschaumstoffformkörper mit einer Formteildichte von 100 bis 300 g/L bei dem man (a) organische Polyisocyanate mit (b) Polyolen, (c) Treibmitteln, enthaltend Wasser und gegebenenfalls (d) Kettenverlängerungsmitteln und/oder Vernetzungsmitteln, (e) Katalysatoren und (f) sonstigen Hilfsmitteln und/oder Zusatzstoffen, zu einer Reaktionsmischung vermischt, in eine Form gibt und zu einem Polyurethanschaumstoffformkörper ausreagieren lässt, wobei das freie Raumgewicht des Polyurethanschaumstoffs 90 bis 200 g/L beträgt und die Form mindestens eine Einrichtung zur Druckkontrolle aufweist. Weiter betrifft die vorliegende Erfindung ein Polyurethanschaumstoffformkörper, erhältlich nach einem solchen Verfahren und die Verwendung eines solchen Polyurethanformkörpers als Schuhsohle.

Innerhalb der letzten Jahre ist ein Trend zu leichteren Schuhsohlen festzustellen. Die Reduktion der Dichte bei Polyurethanschuhsohlen, insbesondere bei Formteildichten von kleiner als 300 g/L, führt allerdings zu Problemen bei der Herstellung der Formkörper. Insbesondere bei den üblicherweise wassergetriebenen Systemen werden die Formen nicht komplett ausgefüllt oder es finden sich vermehrt Hautablöser an der Oberfläche der Formkörper. Auch tritt an manchen Stellen Schrumpf der Formkörper auf, was sich durch Defekte der Formkörperoberfläche bemerkbar macht. Schließlich tritt häufig eine irreguläre Zellmorphologie auf, wodurch die Formkörper uneinheitliche mechanische Eigenschaften aufweisen.

Bei der Herstellung von Polyurethanschuhsohlen wird grundsätzlich zwischen der Herstellung separater Formsohlen oder der Direktanspritzung unterschieden. Bei der Direktanspritzung werden innerhalb des Prozesses komplette Schuhe erzeugt. Dabei fungiert der Schuhschaft als Deckel des Schäumwerkzeugs. Nach der Injektion des flüssigen Polyurethangemisch wird eine Verklebung des Schuhschafts mit dem aufschäumenden Reaktivgemischs erhalten, sodass die ausreagierte Sohle nach dem Entformen intensiv mit dem Schaft verbunden ist. Der weitaus größere Anteil der Industriell hergestellten Polyurethanschuhsohlen wird als Formsohlen produziert und anschließend mit dem Schaft und ggf. einer Laufsohle verklebt. Eine Formsohle wird erhalten, indem man ein Polyurethanreaktivgemisch bestehend aus Polyol, Additiven und Isocyanatprepolymeren mittels einer Mischeinheit, zumeist eine Niederdruckmaschine, in eine offene Form austrägt. Nach dem Eintragen dieser Mischung wird die Form mit einem Deckel verschlossen. Das flüssige Polyurethanreaktivgemisch expandiert innerhalb der Form und geht während der Reaktion von einem flüssigen in einen festen Zustand über und nimmt dadurch das Abbild der Form an. Die Luft, die sich nach dem Eintragen des Reaktivgemischs in der Form befindet, wird über Kontaktfläche zwischen Formdeckel und Formboden durch das Reaktivgemisch aus der Form gedrückt. Ein gewisser Anteil des Polyurethanreaktivgemischs drängt sich zwischen die Kontaktfläche von Formdeckel und Formboden. Solche Austriebe werden als Overflash oder Schwimmhäute bezeichnet und müssen entsprechend nachgearbeitet werden. Klassisch werden solche Austriebe mittels Scheidapparaturen entfernt. Dies hat allerdings den Nachteil, dass die sichtbare Oberfläche der Sohle beschädigt wird und führt dazu, dass Feuchtigkeit schneller in die Sohle eindringen kann, welches zu einer beschleunigten Hydrolyse führt. Ferner führt das Abschneiden der Schwimmhäute dazu, dass beim Verwenden eines "Inmould Coatings" ein Streifen mit einer anderen Farbe entsteht. Dieser Steifen mit einer unterschiedlichen Färbung muss später noch einmal nachgearbeitet werden, um eine Formsohle mit homogener Färbung zu erhalten.

Die Herstellung von niederdichten Polyurethanformsohlen mit Dichten von kleiner 300 g/L gestaltet sich schwieriger, da weniger Material in die entsprechende Form eingetragen werden kann. Dies führt in der Regel zu einer schlechten Formfüllung oder Fehlstellen.

Zur Vermeidung von Fehlstellen und zur besseren Formfüllung der niederdichten Schaumstoffe wird dem Polyurethansystem üblicherweise mehr Wasser als Treibmittel zugegeben. Dies führt zu vermehrter Harnstoffbildung und einem unerwünschten Nachtreiben des Schaumstoffs. Dieses Nachtreiben kann als Ursache für irreguläre Zellmorphologie und Hautablöser angesehen werden. Ferner führt der höhere Druck der für die Formfüllung aufgebracht werden muss dazu, dass mehr Material zwischen den Formdeckel und dem Formunterteil gedrückt wird, wodurch mehr Abfall entsteht. In der Literatur werden verschieden Verfahren beschrieben um niederdichte Polyurethanschuhsohlen zu erhalten. So beschriebt EP 1 726 612 ein Verfahren zur Herstellung von niederdichten Schuhsohlen bei dem Kohlendioxid zusätzlich in der Polyolkomponente gelöst wird. Hierbei können Formteildichten mit 250 g/L und einem Verdichtungsfaktor von 1,5 bis 2,0 realisiert werden. Durch das zusätzlich gelöste CO₂, wird ein höherer Druck des Reaktivgemischs in der geschlossen Form erzeugt, wodurch eine Formfüllung mit kleinen Verdichtungsfaktoren möglich ist. Dabei verdampft das gelöste CO₂ bei Temperaturanstieg des Reaktionsgemischs nahezu schlagartig und das noch niedermolekulare Reaktionsgemisch füllt die Form aus. Damit umgeht EP 1 726 612 den Einsatz von einem höheren Wasseranteil in der Polyurethanmischung und das verschlechtern der mechanischen Eigenschaften. Ein Nachteil des in EP 1 726 612 beschrieben Verfahrens ist, dass der Eintrag von CO₂ in die Polyolkomponente mit zusätzlichen apparativen Aufwand verbunden ist und auch nur unter Verwendung von Polyetherolen möglich ist. Ferner löst EP 1 726 612 nicht das Problem welches durch die Ausprägung der "Schwimmhäute" entsteht.

Ebenso werden in den klassischen Verfahren zur Herstellung von niederdichten Formsohlen zur Vermeidung von Hautablösern die Formen manuell in bestimmte Positionen oder Winkel gebracht. Die Bestimmung des optimalen Winkels bzw. Eintragspunktes in die Form ist mit viel Aufwand verbunden und muss im Produktionsprozess für jede einzelne Form manuell durchgeführt werden.

Aufgabe der vorliegenden Erfindung war es daher, ein einfaches und ökonomisches Verfahren zu liefern, das die Herstellung von Polyurethanschaumstoffformkörpern mit einer Dichte von 100 bis 300 g/L mit guten mechanischen Eigenschaften ermöglicht und die nicht die Nachteile des klassischen Verfahrens aufweist.

Diese Aufgabe wurde gelöst durch ein Verfahren zur Herstellung von Polyurethanschaumstoffformkörper mit einer Formteildichte von 100 bis 300 g/L bei dem man (a) organische Polyisocyanate mit (b) Polyolen, (c) Treibmitteln, enthaltend Wasser und gegebenenfalls (d) Kettenverlängerungsmitteln und/oder Vernetzungsmitteln, (e) Katalysatoren und (f) sonstigen Hilfsmitteln und/oder Zusatzstoffen, zu einer Reaktionsmischung vermischt, in eine Form gibt und zu einem Polyurethanschaumstoffformkörper ausreagieren lässt, wobei das freie Raumgewicht des Polyurethanschaumstoffs 90 bis 200 g/L beträgt und die Form mindestens eine Einrichtung zur Druckkontrolle aufweist.

Dabei ermöglicht die Einrichtung zur (Über)Druckkontrolle, dass die nach dem Eintragen der Polyurethanreaktionsmischung in der geschlossenen Form enthaltene Luft kontrolliert aus der Form entweichen kann. Eine Einrichtung zur Druckkontrolle kann dabei vorzugsweise ein Ventil oder eine Öffnung in der Form, besonders bevorzugt eine Öffnung in der Form sein. Die Öffnung in der Form ist vorzugsweise rechteckig, quadratisch, ellipsoid oder rund und weist an der längsten Achse vorzugsweise einen Durchmesser von 0,15 mm bis 9 mm, besonders bevorzugt 1 mm bis 5 mm und insbesondere 1,5 mm bis 4 mm, auf. Dabei beträgt die Fläche einer Öffnung in deren Querschnitt, die Öffnungsfläche, vorzugsweise 0,01 mm² bis 60 mm², vorzugsweise 0,5 mm² bis 19 mm² und insbesondere 1,7 bis 12 mm². Diese Öffnungen befinden sich bevorzugt an Bereichen des späteren Formkörpers, der bei Gebrauch mit möglichst wenig Feuchtigkeit in Kontakt kommt, beispielsweise bei Schuhsohlen in einem Bereich, der bei der späteren Schuhherstellung mit weiteren Materialien, beispielsweise einer Außensohle oder dem Fußbett, bedeckt wird. Wenn die Polyurethanreaktionsmischung beim Aufschäumen in der Form die Öffnung erreicht bildet sich in der Öffnung vorzugsweise ein Polyurethanpfropf, so dass der Austritt von Polyurethanreaktionsmischung durch die Öffnung minimal ist. Dies kann erreicht werden, indem die Reaktionsmischung so eingestellt wird, dass diese bei Einfließen in die Öffnung bereits eine hohe Viskosität hat. Dadurch kann durch weitere Treibreaktion in der Form der Druck innerhalb der Form stark ansteigen, was die Integralstruktur des erfindungsgemäßen Polyurethanformkörpers positiv beeinflussen kann.

In einer Ausführungsform der Erfindung weist die Form nur eine Einrichtung zur Druckkontrolle auf. Diese eine Einrichtung zur Druckkontrolle ist vorzugsweise in einem Bereich der Form angebracht, die zuletzt von der Polyurethanreaktionsmischung erreicht wird.

Es können aber in einer weiteren Ausführungsform auch mehrere, beispielsweise bis zu 10, vorzugsweise 2 bis 7 und besonders bevorzugt 2 bis 4 Einrichtungen zur Druckkontrolle an einer Form vorhanden sein. Dabei können diese auch ein unterschiedliches Entlüftungsverhalten an unterschiedlichen Stellen der Form erlauben, beispielsweise durch die Verwendung von Öffnungen mit unterschiedlichen Öffnungsflächen. Dadurch ist es möglich, dass die Polyurethanschuhsohle in der Umgebung der jeweiligen Einrichtungen zur Druckkontrolle unterschiedliche Eigenschaften, beispielsweise Härten, aufweist. So kann beispielsweise eine Schuhsohle erhalten werden, die im Vorfuß- und Hackenbereich unterschiedliche Härten aufweist.

Im Rahmen der Erfindung ist unter dem Verdichtungsgrad das Verhältnis der Formteildichte zum freien Raumgewicht eines Polyurethansystems zu verstehen. Zur Ermittlung des freien Raumgewichts wird die Polyurethanreaktionsmischung beispielsweise in einen offenen Becher gegeben und bei Raumtemperatur und Atmosphärendruck ausreagieren lassen. Anschließend wird das Volumen und die Masse des ausgehärteten Formkörpers bestimmt und das freie Raumgewicht als Quotient der Masse und des Volumens berechnet. In einer bevorzugten Ausführungsform der Erfindung beträgt der Verdichtungsfaktor maximal 1,6, vorzugsweise 1,1 bis 1,5 und besonders bevorzugt 1,2 bis 1,4. Dabei kann beispielsweise das zur Herstellung des Polyurethanschaumstoffformkörpers eingesetzte Polyurethanreaktionsgemisch so eingestellt sein, dass diese Werte erreicht werden.

Bei den erfindungsgemäßen Polyurethanschaumstoffformkörpern handelt es sich bevorzugt um Integralschaumstoffe, insbesondere um solche gemäß DIN 7726. In einer bevorzugten Ausführungsform betrifft die Erfindung Integralschaumstoffe auf Basis von Polyurethanen mit einer Shore Härte im Bereich von 20-90 A, bevorzugt von 25 bis 60 Shore A, insbesondere 30 bis 55 Shore A, gemessen nach DIN 53505. In einer besonders bevorzugten Ausführungsform der Erfindung liegt die Härte der Integralschaumstoffe zwischen 45 und 70 Asker C, gemessen nach JIS K 7312. Weiterhin weisen die erfindungsgemäßen Integralschaumstoffe bevorzugt Zugfestigkeiten von 0,5 bis 10 N/mm², bevorzugt von 1 bis 5 N/mm² und besonders bevorzugt 1,25 bis 3 N/mm² gemessen nach DIN 53504 auf. Ferner weisen die erfindungsgemäßen Integralschaumstoffe bevorzugt eine Dehnung von 100 bis 800 %, bevorzugt von 150 bis 500 % und besonders bevorzugt 200 bis 350 %, gemessen nach DIN 53504 auf. Ferner weisen die erfindungsgemäßen Integralschaumstoffe bevorzugt eine Rückprallelastizität nach DIN 53 512 von 20 bis 60 % auf. Schließlich weisen die erfindungsgemäßen Integralschaumstoffe bevorzugt eine Weiterreißfestigkeit von 1 bis 10 N/mm, bevorzugt von 1,5 bis 5 N/mm, gemessen nach ASTM D3574, auf. Insbesondere handelt es sich bei den erfindungsgemäßen Polyurethanschaumstoffformkörpern um Polyurethanschuhsohlen und in einer besonders bevorzugten Ausführungsform um Zwischensohlen

Die erfindungsgemäßen Polyurethanschaumstoffformkörper weisen ein Dichte von 100 bis 300 g/L, vorzugsweise 120 bis 250 g/L und besonders bevorzugt 150 bis 225 g/L auf. Unter Dichte des Polyurethanschaumstoffformkörpers ist hierbei die gemittelte Dichte über den gesamten Schaumstoff zu verstehen, d.h. bei Integralschaumstoffen bezieht sich diese Angabe auf die mittlere Dichte des gesamten Schaumstoffs inklusive Kern und Außenschicht.

Die zur Herstellung der erfindungsgemäßen Polyurethanschaumstoffformkörper verwendeten organischen und/oder modifizierten Polyisocyanate (a) umfassen die aus dem Stand der Technik bekannten aliphatischen, cycloaliphatischen und aromatischen zwei- oder mehrwertigen Isocyanate (Bestandteil a-1) sowie beliebige Mischungen daraus. Beispiele sind monomeres Methandiphenyldiisocyanat (MMDI), wie 4,4'-Methandiphenyldiisocyanat, 2,4'-Methandiphenyldiisocyanat, die Mischungen aus monomeren Methandiphenyldiisocyanaten und höherkernigen Homologen des Methandiphenyldiisocyanats (Polymer-MDI), Tetramethylendiisocyanat, Hexamethylendiisocyanat (HDI), Isophorondiisocyanat (IPDI), 2,4- oder 2,6-Toluylendiisocyanat (TDI) oder Mischungen der genannten Isocyanate.

Bevorzugt wird 4,4'-MDI verwendet. Das bevorzugt verwendete 4,4'-MDI kann 0 bis 20 Gew.-% 2,4' MDI und geringe Mengen, bis etwa 10 Gew.-%, allophanat- oder uretoniminmodifizierte Polyisocyanate enthalten. Es können auch geringe Mengen Polyphenylenpolymethylenpolyisocyanat (Polymer-MDI) eingesetzt werden. Die Gesamtmenge dieser hochfunktionellen Polyisocyanate sollte 5 Gew.-% des eingesetzten Isocyanats nicht überschreiten.

Die Polyisocyanatkomponente (a) wird bevorzugt in Form von Polyisocyanatprepolymeren eingesetzt. Diese Polyisocyanatprepolymere sind erhältlich, indem vorstehend beschriebene Polyisocyanate (a-1), beispielsweise bei Temperaturen von 30 bis 100 °C, bevorzugt bei etwa 80 °C, mit Polyolen (a-2), zum Prepolymer umgesetzt werden.

Polyole (a-2) sind dem Fachmann bekannt und beispielsweise beschrieben im "Kunststoffhandbuch, Band 7, Polyurethane", Carl Hanser Verlag, 3. Auflage 1993, Kapitel 3.1. Vorzugsweise werden dabei als Polyole (a-2) die unter b1) beschriebenen Polyesterole eingesetzt.

Gegebenenfalls werden den genannten Polyolen bei der Herstellung der Isocyanatprepolymere übliche Kettenverlängerer oder Vernetzungsmittel zugegeben. Solche Substanzen sind im Folgenden unter d) beschrieben.

In einer Ausführungsform der Erfindung werden vorzugsweise als organische Polyisocyanate (a) Prepolymere eingesetzt, die erhältlich sind durch Umsetzung von Polyisocyanaten (a-1) mit Polyolen (a-2), wobei die Polyole (b) und die Polyole (a-2) Polyetherole sind.

In einer weiteren Ausführungsform der Erfindung werden vorzugsweise als organische Polyisocyanate (a) Prepolymere eingesetzt, die erhältlich sind durch Umsetzung von Polyisocyanaten (a-1) mit Polyolen (a-2), wobei die Polyole (b) und die Polyole (a-2) Polyesterole sind.

Vorzugsweise wird ein Isocyanatprepolymer so hergestellt, dass der Isocyanatgehalt im Prepolymer 8 bis 28 Gew.-%, besonders bevorzugt 10 bis 25 Gew.-% und insbesondere 14 bis 23 Gew.-% beträgt.

Als Polyole b) können beispielsweise Polyetherole oder Polyesterole mit mindestens zwei gegen Isocyanatgruppen reaktiven Wasserstoffatomen eingesetzt werden. Vorzugsweise weisen Polyole b) ein zahlenmittleres Molekulargewicht von größer 450 g/mol, besonders bevorzugt von größer 500 bis kleiner 12.000 g/mol und insbesondere von 600 bis 8.000 g/mol auf. Polyetherole werden nach bekannten Verfahren hergestellt, beispielsweise durch anionische Polymerisation mit Alkalihydroxiden oder Alkalialkoholaten als Katalysatoren und unter Zusatz mindestens eines Startermoleküls, das 2 bis 3 reaktive Wasserstoffatome gebunden enthält, oder durch kationische Polymerisation mit Lewis-Säuren, wie Antimonpentachlorid oder Borfluorid-Etherat aus einem oder mehreren Alkylenoxiden mit 2 bis 4 Kohlenstoffatomen im Alkylenrest. Geeignete Alkylenoxide sind beispielsweise, 1,3-Propylenoxid, 1,2- bzw. 2,3-Butylenoxid und vorzugsweise Ethylenoxid und 1,2-Propylenoxid. Des Weiteren kann Tetrahydrofuran Monomer eingesetzt werden. Weiter können als Katalysatoren auch Multimetallcyanidverbindungen, sogenannte DMC-Katalysatoren, eingesetzt werden. Die Alkylenoxide können einzeln, alternierend nacheinander oder als Mischungen verwendet werden. Bevorzugt werden Mischungen aus 1,2-Propylenoxid und Ethylenoxid, wobei das Ethylenoxid in Mengen von 10 bis 50 % als Ethylenoxid-Endblock eingesetzt wird ("EO-cap"), so dass die entstehenden Polyole zu über 70 % primäre OH-Endgruppen aufweisen.

Als Startermolekül kommen Wasser oder 2- und 3-wertige Alkohole, wie Ethylenglykol, 1,2- und 1,3-Propandiol, Diethylenglykol, Dipropylenglykol, 1,4-Butandiol, Glycerin oder Trimethylolpropan in Betracht.

Die Polyetherpolyole, vorzugsweise Polyoxypropylen-polyoxyethylen-polyole, besitzen vorzugsweise eine Funktionalität von 1,7 bis 3 und zahlenmittlere Molekulargewichte von 1.000 bis 12.000, vorzugsweise von 1.500 bis 8.000 g/mol, insbesondere von 2.000 bis 6.000 g/mol.

Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen, hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. w-Hydroxycapronsäure.

Zur Herstellung der Polyesterpolyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, oder Argon in der Schmelze bei Temperaturen von 150 bis 250°C, vorzugsweise 180 bis 220°C, gegebenenfalls unter vermindertem Druck, bis zu der gewünschten Säurezahl, die vorzugsweise kleiner als 10, besonders bevorzugt kleiner als 2 ist, polykondensiert werden. Nach einer bevorzugten Ausführungsform wird als Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol zur azeotropen Abdestillation des Kondensationswassers durchgeführt werden. Zur Herstellung der Polyesterpolyole werden die organischen Polycarbonsäuren und/oder -derivate und mehrwertigen Alkohole vorteilhafterweise im Molverhältnis von 1 :1 bis 1,8, vorzugsweise 1 :1,05 bis 1,2 polykondensiert.

Die erhaltenen Polyesterpolyole besitzen vorzugsweise eine Funktionalität von 2 bis 4, insbesondere von 2 bis 3, und ein zahlenmittleres Molekulargewicht von 480 bis 3000, vorzugsweise 1000 bis 3000 g/mol.

Als Polyole eignen sich ferner polymermodifizierte Polyole, vorzugsweise polymermodifizierte Polyesterole oder Polyetherole, besonders bevorzugt Pfropf-Polyether- bzw. Pfropf-Polyesterole, insbesondere Pfropf-Polyetherole. Hierbei handelt es sich um ein sogenanntes Polymerpolyol, welches üblicherweise einen Gehalt an, bevorzugt thermoplastischen, Polymeren von 5 bis 60 Gew.-%, bevorzugt 10 bis 55 Gew.-%, besonders bevorzugt 30 bis 55 Gew.-% und insbesondere 40 bis 50 Gew.-%, aufweist. Diese Polymerpolyesterole sind beispielsweise in WO 05/098763 und EP-A-250 351 beschrieben und werden üblicherweise durch radikalische Polymerisation von geeigneten olefinischen Monomeren, beispielsweise Styrol, Acrylnitril, (Meth)Acrylaten, (Meth)Acrylsäure und/oder Acrylamid, in einem als Pfropfgrundlage dienenden Polyesterol hergestellt. Die Seitenketten entstehen im Allgemeinen durch Übertragung der Radikale von wachsenden Polymerketten auf Polyesterole oder Polyetherole. Das Polymer-Polyol enthält neben dem Pfropfcopolymerisaten überwiegend die Homopolymere der Olefine, dispergiert in unverändertem Polyesterol bzw. Polyetherol.

In einer bevorzugten Ausführungsform werden als Monomere Acrylnitril, Styrol, bevorzugt Acrylnitril und Styrol verwendet. Die Monomere werden gegebenenfalls in Gegenwart weiterer Monomere, eines Makromers, d.h. eines ungesättigten, radikalisch polymerisierbaren Polyols, eines Moderators und unter Einsatz eines Radikal-Initiators, meist Azo- oder Peroxidverbindungen, in einem Polyesterol oder Polyetherol als kontinuierlicher Phase polymerisiert. Dieses Verfahren ist beispielsweise in DE 111 394, US 3 304 273, US 3 383 351, US 3 523 093, DE 1 152 536 und DE 1 152 537 beschrieben.

Während der radikalischen Polymerisation werden die Makromere mit in die Copolymerkette eingebaut. Dadurch bilden sich Blockcopolymere mit einem Polyester- bzw. Polyether- und einem Poly-acrylnitril-styrol-Block, welche in der Grenzfläche von kontinuierlicher Phase und dispergierter Phase als Phasenvermittler wirken und das Agglomerieren der Polymerpolyesterolpartikel unterdrücken. Der Anteil der Makromere beträgt üblicherweise 1 bis 20 Gew.-%, bezogen auf das Gesamtgewicht der zur Herstellung des Polymerpolyols eingesetzten Monomere.

Ist Polymerpolyol enthalten, liegt dies vorzugsweise zusammen mit weiteren Polyolen vor, beispielsweise Polyetherolen, Polyesterolen oder Mischungen aus Polyetherolen und Polyesterolen. Besonders bevorzugt ist der Anteil an Polymerpolyol größer als 5 Gew.-%, bezogen auf das Gesamtgewicht der Komponente (b). Die Polymerpolyole können beispielsweise, bezogen auf das Gesamtgewicht der Komponente (b) in einer Menge von 7 bis 90 Gew.-%, oder von 11 bis 80 Gew.-% enthalten sein. Besonders bevorzugt handelt es sich bei dem Polymerpolyol um Polymerpolyesterol oder Polymerpolyetherol.

Vorzugsweise werden als Polyole b) Mischungen, enthaltend Polyesterole eingesetzt. Dabei beträgt der Anteil von Polyesterolen an den Polyolen (b) vorzugsweise mindestens 30 Gew.-%, besonders bevorzugt mindestens 70 Gew.-% und insbesondere wird als höhermolekulare Verbindung (b) ausschließlich Polyesterol eingesetzt, wobei ein Polymerpolyol auf Basis von Polyesterol bei dieser Berechnung wie ein Polyesterol behandelt wird.

Ferner sind bei der Herstellung von Polyurethanschaumstoffformkörpern Treibmittel c) zugegen. Diese Treibmittel c) können Wasser enthalten. Als Treibmittel c) können neben Wasser noch zusätzlich allgemein bekannte chemisch und/oder physikalisch wirkende Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone, Acetale oder Mischungen daraus, beispielsweise (cyclo)aliphatische Kohlenwasserstoffe mit 4 bis 8 Kohlenstoffatomen, oder Fluorkohlenwasserstoffe, wie Solkane^{®} 365 mfc der Firma Solvay Fluorides LLC. In einer bevorzugten Ausführungsform wird als Treibmittel eine Mischung enthaltend mindestens eines dieser Treibmittel und Wasser eingesetzt, besonders bevorzugt werden keine physikalischen Treibmittel und insbesondere Wasser als alleiniges Treibmittel eingesetzt.

Der Gehalt an Wasser beträgt in einer bevorzugten Ausführungsform von 0,1 bis 3 Gew.-%, bevorzugt 0,4 bis 2,0 Gew.-%, besonders bevorzugt 0,6 bis 1,5 Gew.-%, bezogen auf das Gesamtgewicht der Komponenten a) bis f).

In einer weiteren bevorzugten Ausführungsform werden der Umsetzung der Komponenten a) bis f) als zusätzlich Mikrohohlkugeln, die physikalisches Treibmittel enthalten, zugegeben. Die Mikrohohlkugeln können auch im Gemisch mit den vorstehend genannten Treibmitteln eingesetzt werden.

Die Mikrohohlkugeln bestehen üblicherweise aus einer Hülle aus thermoplastischem Polymer und sind im Kern mit einer flüssigen, niedrig siedenden Substanz auf Basis von Alkanen gefüllt. Die Herstellung solcher Mikrohohlkugeln ist beispielsweise in US 3 615 972 beschrieben. Die Mikrohohlkugeln weisen im allgemeinen einen Durchmesser von 5 bis 50 µm auf. Beispiele für geeignete Mikrohohlkugeln sind unter dem Handelsnamen Expancell^{®} der Firma Akzo Nobel erhältlich.

Die Mikrohohlkugeln werden im allgemeinen in einer Menge von 0,5 bis 5 Gew.-%, bezogen auf das Gesamtgewicht der Komponenten b) und c) zugesetzt. In einer besonders bevorzugten Ausführungsform werden als Treibmittel eine Mischung aus Mikroholkugeln und Wasser eingesetzt, wobei keine weiteren physikalischen Treibmittel enthalten sind.

Als Kettenverlängerungsmittel und/oder Vernetzungsmittel d) werden Substanzen mit einem Molekulargewicht von vorzugsweise kleiner 450 g/mol, besonders bevorzugt von 60 bis 400 g/mol eingesetzt, wobei Kettenverlängerer 2 gegenüber Isocyanaten reaktive Wasserstoffatome und Vernetzungsmittel 3 gegenüber Isocyanat reaktive Wasserstoffatome aufweisen. Diese können bevorzugt einzeln oder in Form von Mischungen eingesetzt werden. Vorzugsweise werden Diole und/oder Triole mit Molekulargewichten kleiner als 400, besonders bevorzugt von 60 bis 300 und insbesondere 60 bis 150 eingesetzt. In Betracht kommen beispielsweise aliphatische, cycloaliphatische und/oder araliphatische Diole mit 2 bis 14, vorzugsweise 2 bis 10 Kohlenstoffatomen, wie Ethylenglykol, 1,3-Propandiol, 1,10-Decandiol, 1,2-, 1,3-, 1,4-Dihydroxycyclohexan, Diethylenglykol, Dipropylenglykol und 1,4-Butandiol, 1,6-Hexandiol und Bis-(2-hydroxyethyl)-hydrochinon, Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Besonders bevorzugt werden als Kettenverlängerer (d) Monoethylenglycol, 1,4-Butandiol, Diethylengylcol, Glycerin oder Mischungen davon eingesetzt.

Sofern Kettenverlängerungsmittel, Vernetzungsmittel oder Mischungen davon Anwendung finden, kommen diese zweckmäßigerweise in Mengen von 1 bis 60 Gew.-%, vorzugsweise 1,5 bis 50 Gew.-% und insbesondere 2 bis 40 Gew.-%, bezogen auf das Gewicht der Komponenten b) und d), zum Einsatz.

Als Katalysatoren e) zur Herstellung der Polyurethanschaumstoffe werden bevorzugt Verbindungen verwendet, welche die Reaktion der Polyole b) und gegebenenfalls Kettenverlängerungs- und Vernetzungsmittel d) sowie chemischem Treibmittel (c) mit den organischen, gegebenenfalls modifizierten Polyisocyanaten a) stark beschleunigen. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat, sowie Bismutcarboxylate, wie Bismut(III)-neodecanoat, Bismut-2-ethylhexanoat und Bismut-octanoat oder Mischungen davon. Die organischen Metallverbindungen können allein oder vorzugsweise in Kombination mit stark basischen Aminen eingesetzt werden. Handelt es sich bei der Komponente (b) um einen Ester, werden vorzugsweise ausschließlich Aminkatalysatoren eingesetzt.

Vorzugsweise verwendet werden 0,001 bis 5 Gew.-%, insbesondere 0,05 bis 2 Gew.-% Katalysator bzw. Katalysatorkombination, bezogen auf das Gewicht der Komponente b). Vorzugsweise werden die Katalysatoren aber so ausgewählt und in entsprechenden Mengen eingesetzt, dass ein Polyurethanschaumstoffformkörper nach maximal 10 Minuten, besonders bevorzugt nach 7 Minuten und insbesondere nach maximal 5 Minuten entformt werden kann. Dabei beziehen sich diese Zeitangaben auf die Zeitspanne, die zwischen Eintragen der Reaktionsmischung in die Form und defektfreier Entformbarkeit der Polyurethanschaumstoffformteile liegt.

In einer bevorzugten Ausführungsform der Erfindung weisen die Polyurethanreaktionsmischungen eine Startzeit von 1 bis 25 Sekunden, bevorzugt 3 bis 20 Sekunden und besonders bevorzugt eine Startzeit von 5 bis 15 Sekunden und eine Steigzeit von 30 bis 120 Sekunden, bevorzugt 35 bis 90 Sekunden auf. Dabei ist die Startzeit die Zeit die nach dem Vermischen der Komponenten (a) bis (c) und gegebenenfalls (d) bis (f) vergeht bis eine Volumenexpansion beginnt und die Steigzeit die Zeitspanne, die zwischen dem Eintrag des Reaktivsystems und dem Ende der Volumenexpansion liegt.

Der Reaktionsmischung zur Herstellung der Polyurethanschäume können gegebenenfalls auch noch Hilfsmittel und/oder Zusatzstoffe f) zugegeben werden. Genannt seien beispielsweise oberflächenaktive Substanzen, Schaumstabilisatoren, Zellregler, weitere Trennmittel, Füllstoffe, Farbstoffe, Pigmente, Hydrolyseschutzmittel, geruchsabsorbierende Substanzen und fungistatische und/oder bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren, sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure, und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente b), eingesetzt.

Als geeignete weitere Trennmittel seien beispielhaft genannt: Umsetzungsprodukte von Fettsäureestern mit Polyisocyanaten, Salze aus Aminogruppen enthaltenden Polysiloxanen und Fettsäuren, Salze aus gesättigten oder ungesättigten (cyclo)aliphatischen Carbonsäuren mit mindestens 8 C-Atomen und tertiären Aminen sowie insbesondere innere Trennmittel, wie Carbonsäureester und/oder -amide, hergestellt durch Veresterung oder Amidierung einer Mischung aus Montansäure und mindestens einer aliphatischen Carbonsäure mit mindestens 10 C-Atomen mit mindestens difunktionellen Alkanolaminen, Polyolen und/oder Polyaminen mit Molekulargewichten von 60 bis 400 g/mol, wie beispielsweise in EP 153 639 offenbart, Gemischen aus organischen Aminen, Metallsalzen der Stearinsäure und organischen Mono- und/oder Dicarbonsäuren oder deren Anhydride, wie beispielsweise in DE-A-3 607 447 offenbart, oder Gemischen aus einer Iminoverbindung, dem Metallsalz einer Carbonsäure und gegebenenfalls einer Carbonsäure, wie beispielsweise in US 4 764 537 offenbart. Vorzugsweise enthalten erfindungsgemäße Reaktionsmischungen keine weiteren Trennmittel.

Als Füllstoffe, insbesondere verstärkend wirkende Füllstoffe, sind die an sich bekannten, üblichen organischen und anorganischen Füllstoffe, Verstärkungsmittel, Beschwerungsmittel, Beschichtungsmittel usw. zu verstehen. Im einzelnen seien beispielhaft genannt: anorganische Füllstoffe, wie silikatische Mineralien, beispielsweise Schichtsilikate, wie Antigorit, Bentonit, Serpentin, Hornblenden, Amphibole, Chrisotil und Talkum, Metalloxide, wie Kaolin, Aluminiumoxide, Titanoxide, Zinkoxid und Eisenoxide, Metallsalze wie Kreide und Schwerspat, und anorganische Pigmente, wie Cadmiumsulfid, Zinksulfid sowie Glas u.a. Vorzugsweise verwendet werden Kaolin (China Clay), Aluminiumsilikat und Copräzipitate aus Bariumsulfat und Aluminiumsilikat. Als organische Füllstoffe kommen beispielsweise in Betracht: Russ, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten a) bis d), zugegeben.

Weiter ist Gegenstand der vorliegenden Erfindung ein Verfahren zur Herstellung eines Polyurethanschaumstoffformkörpers, insbesondere eines Polyurethanintegralschaumstoffs bei dem die Komponenten a) bis c) und gegebenenfalls d), e) und/oder f) in solchen Mengen miteinander vermischt werden, dass das Äquivalenzverhältnis von NCO-Gruppen der Polyisocyanate (a) zur Summe der reaktiven Wasserstoffatome der Komponenten (b), (c) und (d) 1 : 0,8 bis 1 : 1,25, vorzugsweise 1 : 0,9 bis 1 : 1,15 beträgt. Dabei entspricht ein Verhältnis von 1 : 1 einem Isocyanatindex von 100. Unter dem Isocyanatindex wird im Rahmen der vorliegenden Erfindung das stöchiometrische Verhältnis an Isocyanatgruppen zu mit Isocyanat reaktiven Gruppen, multipliziert mit 100, verstanden.

Die erfindungsgemäßen Polyurethanschaumstoffformkörper werden vorzugsweise nach dem one-shot-Verfahren mit Hilfe der Niederdruck- oder Hochdrucktechnik in geschlossenen, zweckmäßigerweise temperierten Formwerkzeugen hergestellt. Die Formwerkzeuge bestehen gewöhnlich aus Metall, z.B. Aluminium oder Stahl. Diese Verfahrensweisen werden beispielsweise beschrieben von Piechota und Röhr in "Integralschaumstoff", Carl-Hanser-Verlag, München, Wien, 1975, oder im "Kunststoff-handbuch", Band 7, Polyurethane, 3. Auflage, 1993, Kapitel 7.

Die Ausgangskomponenten a) bis f) werden dazu vorzugsweise bei einer Temperatur von 15 bis 90 °C, besonders bevorzugt von 25 bis 55 °C gemischt und die Reaktionsmischung gegebenenfalls unter erhöhtem Druck in das Formwerkzeug eingebracht. Die Vermischung kann mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 20 bis 160 °C, vorzugsweise 30 bis 120 °C, besonders bevorzugt 30 bis 60 °C. Dabei wird im Rahmen der Erfindung die Mischung der Komponenten a) bis f) bei Reaktionsumsätzen kleiner 90 %, bezogen auf die Isocyanatgruppen, als Reaktionsmischung bezeichnet.

Die Menge der in das Formwerkzeug eingebrachten Reaktionsmischung wird so bemessen, dass die erhaltenen dass die Formteildichte des erfindungsgemäßen Polyurethanschaumstoffformkörpers 100 bis 300 g/L, vorzugsweise 120 bis 250 g/L und besonders bevorzugt 150 bis 225 g/L beträgt. Dabei wird die Menge des eingesetzten Systems so gewählt, dass ein Verdichtungsfaktor von vorzugsweise maximal 1,6, besonders bevorzugt 1,1 bis 1,5 und insbesondere 1,2 bis 1,4 erhalten wird. Dabei beträgt die freigeschäumte Dichte bei 80 bis 200 g/L und vorzugsweise 100 bis 180 g/L.

Weiter betrifft die vorliegende Erfindung einen Polyurethanschaumstoffformkörper, erhältlich nach einem solchen Verfahren.

Die erfindungsgemäßen Polyurethanschaumstoffformkörper werden vorzugsweise als Schuhsohle und besonders bevorzugt als (Zwischen-)Sohle, zum Beispiel für Straßenschuhe, Sportschuhe, Sandalen und Stiefel eingesetzt. Insbesondere werden die erfindungsgemäßen Polyurethanintegralschaumstoffe als Zwischensohle für Sportschuhe eingesetzt.

Dabei führt ein erfindungsgemäßes Verfahren, insbesondere durch Verwendung einer Form mit einer Einrichtung zur Druckkontrolle zu Polyurethanschaumstoffformkörper mit einer Dichte von 100 bis 300 g/L und einer entsprechend guten Oberflächengüte. Weiter werden durch das erfindungsgemäße Verfahren Probleme wie Hautablöser oder eine unzureichende Schaummorphologie gelöst. So ermöglicht die Einrichtung zur Druckkontrolle, dass weniger Treibmittel eingesetzt wird und dadurch Schaumdefekte an der Oberfläche oder in der Morphologie, die durch Nachdrücken des Treibmittels bei bereits teilweise ausgebildeten Schaumstrukturen entstehen, vermieden werden können. Ferner wird durch das erfindungsgemäße Verfahren erreicht, das weniger Material als Austriebe bzw. Schwimmhäute entsorgt werden müssen.

Im Folgenden soll die Erfindung anhand von Beispielen verdeutlicht werden.

### Beispiele

Verwendete Einsatzstoffe
- Polyol 1:: Polytetrahydrofuran mit einer OHZ von 56 mg KOH/g
- Polyol 2:: Polymerpolyetherpolyol auf Basis von einem 3-funktionalen Polyetherpolyol mit einer OH-Zahl von 28 als Carrierpolyol und 45 Gew.-% Feststoffanteil auf Basis von Styrol/Acrylnitrill
- Polyol 3:: Polyesterol auf Basis von Adipinsäure, Monoethylengylcol und Butandiol mit einer OHZ von 56 mg KOH/g
- Polyol 4:: Hoopol® PM 445 der Firma Synthesia (Polyesterpolymerpolyol)
- Polyol 5:: Polyesterol auf Basis von Adipinsäure, Monoethylenglycol und Butandiol mit einer OHZ von 80 mg KOH/g
- Kat1:: Lupragen® N203 der Firma BASF Polyurethanes
- Kat2:: Dabco® 1027 der Firma Air Products
- Kat3:: Katalysator auf Basis von Imidazolderivaten
- Kat4:: Bis-(2-dimethylaminoethyl)ether gelöst in Diproylenglycol
- Kat5:: verzögerter Aminkatalysator
- Stabi 1:: Dabco® DC 193 der Firma Air Products
- Stabi 2:: Scherstabilisator auf Basis von Polyethersiloxanen
- Stabi 3:: Zellstabilisator auf Basis von Polyethersiloxanen
- Stabi 4:: Zellregulator der Firma Goldschmidt
- Stabi 5:: LK 221 der Firma Air Products
- V1:: trifunktioneller Vernetzer mit einer OH-Zahl von 1160 mg KOH/g
- V2:: trifunktioneller Vernetzer mit einer OH-Zahl von 1825 mg KOH/g
- KV:: Monoethylengylcol
- ISO 1:: ISO 137/28 der Firma BASF Polyurethanes, Prepolymer auf Basis von 4,4'-MDI und Polyetherolen mit einem NCO-Gehlat von 18%
- ISO 2:: ISO 187/39 der Firma BASF Polyurethanes, Prepolymer auf Basis von 4,4'-MDI und Polyesterolen mit einem NCO-Gehalt von 22%
- ISO 3:: ISO 187/43 der Firma BASF Polyurethanes, Prepolymer auf Basis von 4,4'-MDI und Polyesterolen mit einem NCO-Gehalt von 18,2%
- ISO 4:: ISO 187/3 der Firma BASF Polyurethanes, Prepolymer auf Basis von 4,4'-MDI und Polyesterolen mit einem NCO-Gehalt von 16,1%
- ISO 5:: Prepolymer auf Basis von 4,4'-MDI
- ISO 6:: Prepolymer auf Basis von 4,4'-MDI

### Herstellung von ISO 5:

In einen Prepolymerreaktor wurden 14,0 kg monomeres 4,4'-Diphenylmethandiisocyanat mit 4,8 kg einer Mischung aus drei Teilen aus monomerem 4,4'-Diphenylmethandiisocyanat und einem Teil carbodiimidmodifiziertem Diphenylmethandiisocyanat und 4*10⁻⁴ kg Benzylchlorid vorgelegt und auf eine Temperatur von 60°C aufgeheizt. Nach erreichen der Temperatur wurden 21,2 kg Polyol 5 langsam über einen Zeitraum von 30 Minuten zugeben. Nach der Zugabe wurde die Mischung auf 80°C erwärmt und 2 Stunden bei dieser Temperatur gerührt. Das so hergestellte Prepolymer hatte einen NCO-Gehalt von 12,1 %.

### Herstellung von ISO 6:

In einen Prepolymerreaktor wurden 22,8 kg monomeres 4,4'-Diphenylmethandiisocyanat mit 2,4 kg einer Mischung aus drei Teilen aus monomerem 4,4'-Diphenylmethandiisocyanat und einem Teil carbodiimidmodifiziertem Diphenylmethandiisocyanat und 4*10⁻⁴ kg Benzylchlorid vorgelegt und auf eine Temperatur von 60°C aufgeheizt. Nach erreichen der Temperatur wurden 14,8 kg Polyol 3 langsam über einen Zeitraum von 30 Minuten zugeben. Nach der Zugabe wurde die Mischung auf 80°C erwärmt und 2 Stunden bei dieser Temperatur gerührt. Das so hergestellte Prepolymer hatte einen NCO-Gehalt von 19,3 %.

Die in den Beispielen beschrieben Mischungen wurden mit den entsprechenden Isocyanatprepolymeren auf einer Niederdruck Polyurethanmaschine, Typ EMB F20, miteinander vermischt und über die gesamte Form eingetragen. Dabei konnte die Form sowohl planar als auch geneigt aufliegen, wie es in Schuhproduktion üblich ist.

Für die Herstellung der Formkörper wurden klassische Schuhformen zur Herstellung von Zwischensohlen verwendet. Dabei diente die Form für die linke Sohle als Referenz oder Vergleich zum klassischen Verfahren und die rechte Sohle als Beispiel für das erfindungsgemäße Verfahren. Dabei wurden im erfindungsgemäßen Verfahren in die rechte Sohlenform mit entsprechenden Austrieben verschiedener Größe versehen. Folgende Formen wurden verwendet:
- Form 1:: 1 mm großes Loch am Vorfuß, mittig, etwa 1 cm vom Rand
- Form 2:: 5 Löcher, 2,5 mm groß, symmetrisch in gleichen Abständen über die Form verteilt (Abstand zum Rand Vorfuß und Rückfuß etwa 1 cm)
- Form 3:: 5 Löcher, symmetrisch in gleichen Abständen über die Form verteilt, Lochgrößen beginnend vom Rückfuß: 6 mm, 5 mm, 2,5 mm, 2,5 mm, 2,5 mm

Die Formen hatten alle ein Volumen von 260 mL.

Zur Bestimmung des freien Raumgewichts wurden die Mischung in einem Becher frei aufsteigen lassen. Der Verdichtungsfaktor wurde anhand des Formteilvolumens und des freien Raumgewichts der einzelnen Polyurethansysteme bestimmt und über die Menge der in die Form eingetragenen Reaktionsmischung gesteuert.

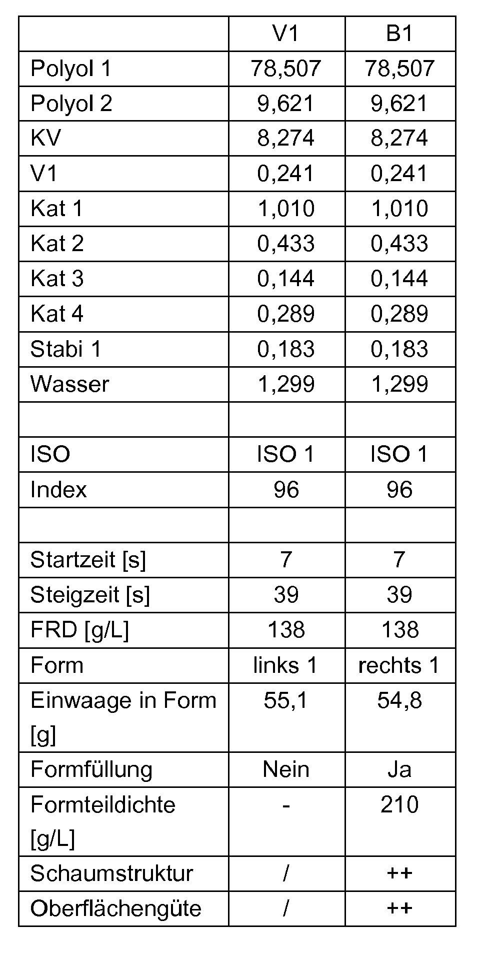

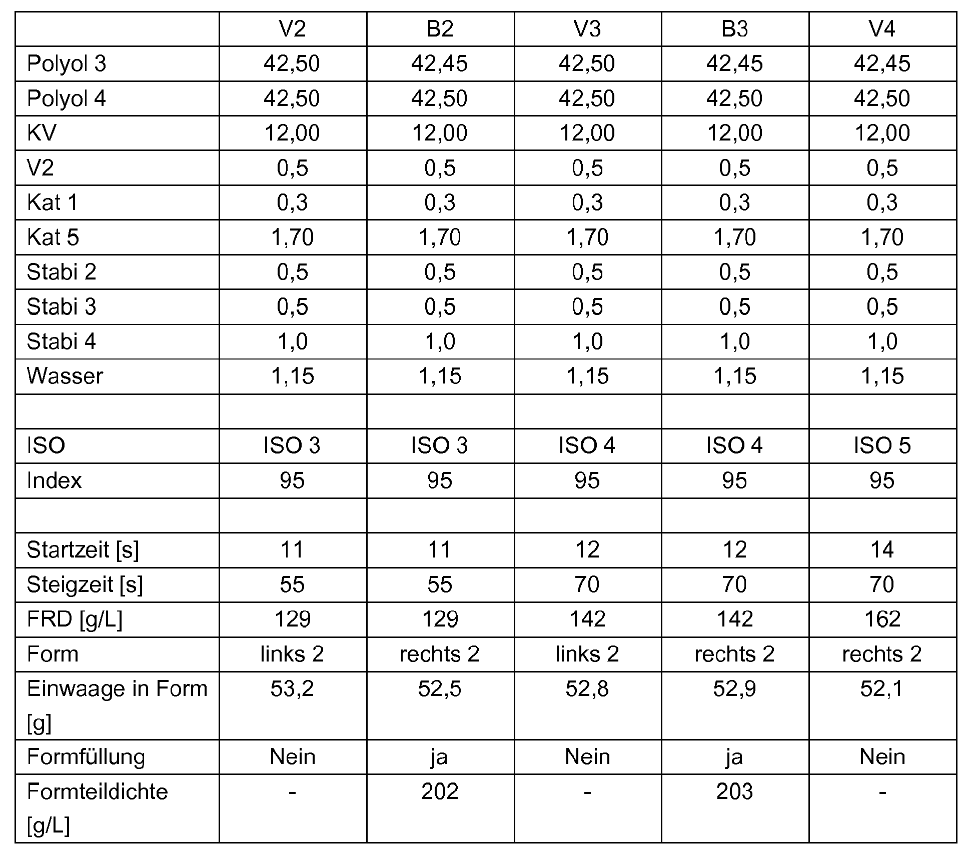

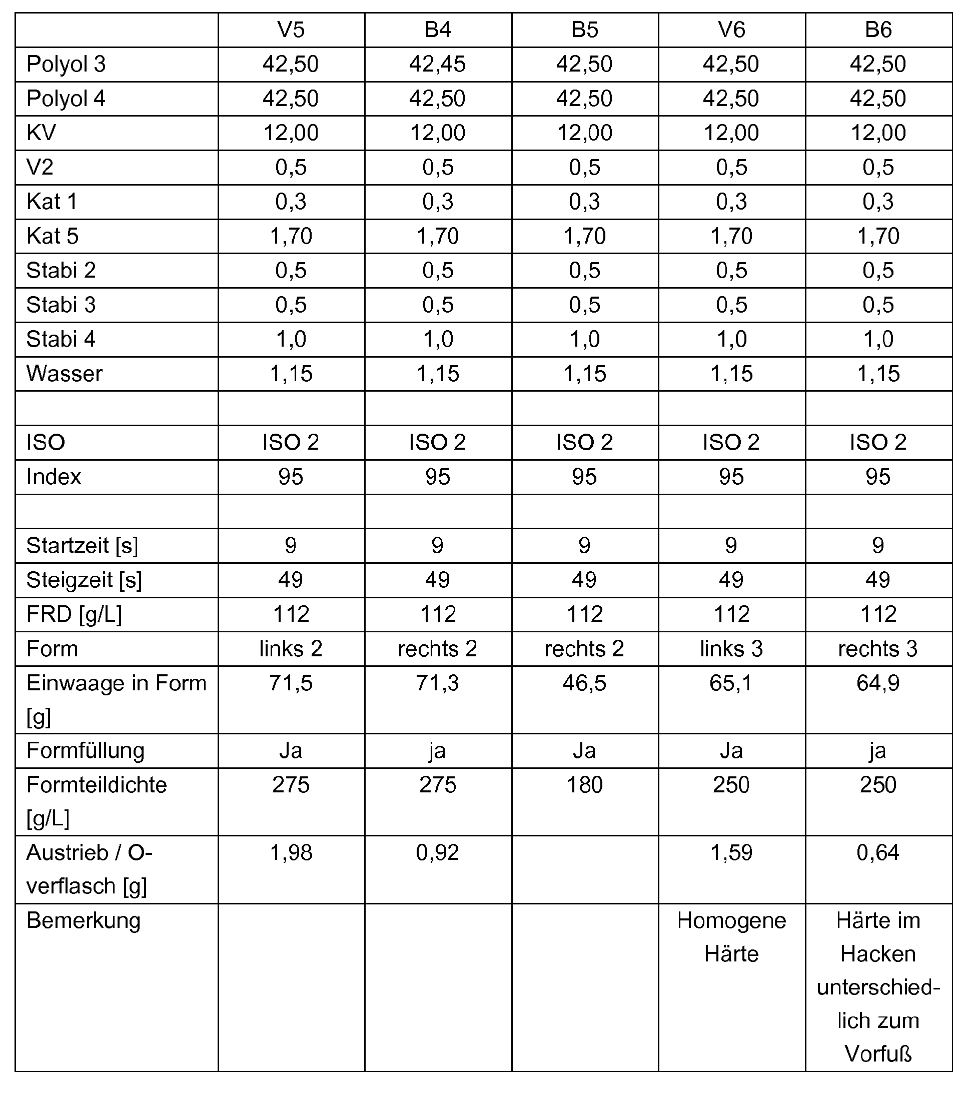

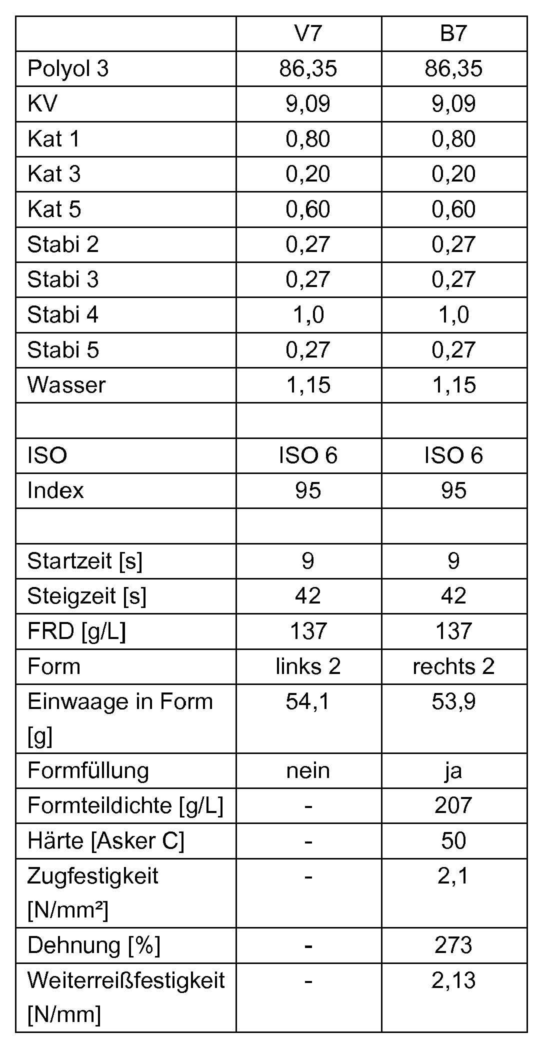

Dabei wurde die Asker C-Härte nach JIS K 7312, die Zugfestigkeit und die Dehnung nach DIN 53504 und die Weiterreißfestigkeit nach ASTM D3574 bestimmt.

Wie aus den Beispielen ersichtlich ist, führt die Kombination von PU-Systemen mit entsprechendem Formdesign zu einer besseren Formfüllung, weniger Produktionsabfall (Austrieb bzw. Overflash) und kann zum Einstellen eines Härte/Dichtegradienten in der Sohle genutzt werden.

## Patentansprüche

1. Verfahren zur Herstellung von Polyurethanschaumstoffformkörper mit einer Formteildichte von 100 bis 300 g/L bei dem man
a) organische Polyisocyanate mit
b) Polyolen,
c) Treibmitteln, enthaltend Wasser und gegebenenfalls
d) Kettenverlängerungsmitteln und/oder Vernetzungsmitteln,
e) Katalysatoren und
f) sonstigen Hilfsmitteln und/oder Zusatzstoffen,
zu einer Reaktionsmischung vermischt, in eine Form gibt und zu einem Polyurethanschaumstoffformkörper ausreagieren lässt,
wobei das freie Raumgewicht des Polyurethanschaumstoffs 90 bis 200 g/L beträgt und die Form mindestens eine Einrichtung zur Druckkontolle aufweist.

2. Verfahren nach Anspruch 1, **dadurch gekennzeichnet, dass** das Isocyanat (a) ein Isocyanatprepolymer mit einem Isocyanatgehalt von 14 bis 23 Gew.-% ist.

3. Verfahren nach Anspruch 1 oder 2, **dadurch gekennzeichnet, dass** die Startzeit der Polyurethanreaktionsmischungl bis 25 Sekunden und die Steigzeit 30 bis 120 Sekunden beträgt und der Verdichtungsfaktor maximal 1,6 beträgt.

4. Verfahren nach einem der Ansprüche 1 bis 3, **dadurch gekennzeichnet, dass** die Treibmittel c) keine physikalischen Treibmittel enthalten.

5. Verfahren nach Anspruch 4, **dadurch gekennzeichnet, dass** das Treibmittel (c) ausschließlich Wasser ist und der Anteil von Wasser am Gesamtgewicht der Komponenten (a) bis (e) 0,1 bis 3 Gew.-% beträgt.

6. Verfahren nach einem der Ansprüche 1 bis 5, **dadurch gekennzeichnet, dass** die Form genau eine Einrichtung zur Druckkontrolle aufweist.

7. Verfahren nach einem der Ansprüche 1 bis 5, **dadurch gekennzeichnet, dass** die Form 2 bis 10 Einrichtungen zur Druckkontrolle aufweist.

8. Verfahren nach Anspruch 7, **dadurch gekennzeichnet, dass** die Einrichtungen zur Druckkontrolle Öffnungen in der Form mit unterschiedlich großen Öffnungsflächen sind.

9. Verfahren nach einem der Ansprüche 1 bis 8, **dadurch gekennzeichnet, dass** die Einrichtungen zur Druckkontrolle eine oder mehrere Öffnungen in der Form mit einem Durchmesser der längsten Achse 1 mm bis 5 mm sind.

10. Verfahren nach Anspruch 8 oder 9, **dadurch gekennzeichnet, dass** eine Einrichtung zur Druckkontrolle eine Öffnungsfläche von jeweils 0,7 mm² bis 19 mm² aufweist.

11. Verfahren nach einem der Ansprüche 1 bis 10, **dadurch gekennzeichnet, dass** die Entformzeit kleiner als 7 Minuten ist.

12. Polyurethanschaumstoffformkörper erhältlich nach einem Verfahren gemäß einem der Ansprüche 1 bis 11.

13. Polyurethanschaumstoffformkörper nach Anspruch 12, **dadurch gekennzeichnet, dass** die Shore Härte im Bereich von 20 bis 90 A, die Zugfestigkeit von 0,5 bis 10 N/mm², die Rückprallintensität von 20 bis 60 %, die Weiterreißfestigkeit von 1 bis 10 N/mm und die Dehnung von 100 bis 800 % beträgt.

14. Verwendung eines Polyurethanformkörpers gemäß Anspruch 12 oder 13 als Schuhsohle.
